# EUROPÄISCHE PATENTSCHRIFT

(11) **EP 0 695 472 B1**
(45) Veröffentlichungstag und Bekanntmachung des Hinweises auf die Patenterteilung: **27.12.1996**
(21) Anmeldenummer: 94914325.9
(22) Anmeldetag: 19.04.1994
(51) Int. Cl.: H02B 11/133

(54) **NIEDERSPANNUNGS-SCHALTANLAGE MIT EINEM GERÄTETRÄGER UND EINER TRENNKONTAKTVORRICHTUNG**
LOW VOLTAGE SWITCHGEAR ASSEMBLY WITH AN APPARATUS RACK AND AN ISOLATING CONTACT DEVICE
INSTALLATION DE DISTRIBUTION ELECTRIQUE BASSE TENSION AVEC UN SUPPORT D'APPAREILS ET UN DISPOSITIF DE CONTACT DISJONCTEUR

(30) Priorität: 21.04.1993 DE 4313647
(43) Veröffentlichungstag der Anmeldung: 07.02.1996
(73) Patentinhaber: SIEMENS AKTIENGESELLSCHAFT, 80333 München (DE)
(72) Erfinder: FEUERBACH, Manfred, D-60389 Frankfurt (DE); MEYER, Stefan, D-60598 Frankfurt (DE); SCHMIDT, Mario, D-04275 Leipzig (DE)
(86) Internationale Anmeldenummer: DE9400519
(87) Internationale Veröffentlichungsnummer: WO9424743

(56) Entgegenhaltungen:
- DE-A- 3 243 106
- DE-A- 3 939 355

## Beschreibung

Die Erfindung betrifft eine Niederspannungs-Schaltanlage mit einem Schrankgerüst und mit Geräteträgern, der mit einer in der Tiefenerstreckung des Schrankgerüstes liegenden Bewegungsrichtung in das Schrankgerüst einsetzbar bzw. entnehmbar ist, mit folgenden Merkmalen
- wenigstens ein Fachboden als untere Begrenzung eines Einschubfaches,
- eine Haupttrennkontaktvorrichtung, bestehend aus je einem an dem Geräteträger angeordneten bewegbaren Trennkontaktblock für die Einspeisung und für wenigstens einen Abgang zu einem Verbraucher sowie an dem Schrankgerüst ortsfest angebrachten, mit den Trennkontaktblöcken zusammenwirkenden Trennkontaktstücken,
- eine Antriebsvorrichtung zum Schließen und Öffnen der Haupttrennkontaktvorrichtung, wenn sich der Geräteträger in dem Einschubfach befindet, wobei die Antriebsvorrichtung eine an dem Geräteträger drehbar gelagerte, und zur Betätigung mittels eines Werkzeuges frontseitig am Geräteträger zugängliche Hauptkontaktwelle sowie eine Umlenkeinrichtung zur Umlenkung einer Drehbewegung der Hauptkontaktwelle in eine quer zur Bewegungsrichtung des Geräteträgers verlaufende Schubrichtung der bewegbaren Trennkontaktblöcke besitzt.

Eine Niederspannungs-Schaltanlage mit diesen Merkmalen ist durch die DE-A-39 39 355 bekannt geworden. Die Ausrüstung der Geräteträger mit Schaltgeräten richtet sich nach dem vorgesehenen Zweck, d. h. nach der Leistung der zu steuernden Verbraucher und der hierfür benötigten Schutzeinrichtungen. Vielfach ist es üblich, auf einem solchen Geräteträger einen Hauptschalter anzubringen, der unmittelbar mit dem einspeisenden Trennkontaktblock verbunden ist. Der Erfindung liegt die Aufgabe zugrunde, einen solchen Hauptschalter gegen unzulässige Betätigung zu schützen.

Gemäß der Erfindung wird diese Aufgabe dadurch gelöst, daß
- mit der Antriebswelle eines zu der Geräteausstattung des Geräteträgers gehörenden, elektrisch in Reihe mit dem der Einspeisung zugeordneten Trennkontaktblock liegenden Hauptschalters eine erste Riegelstange gekuppelt und beim Einschalten des Hauptschalters in Richtung auf die Hauptkontaktwelle verschiebbar ist und
- der Zugang des Werkzeuges zur Hauptkontaktwelle durch die erste Riegelstange versperrbar ist.

Hiermit wird erreicht, daß der Hauptschalter nur bei geöffneten oder geschlossenen Haupttrennkontakten betätigt werden kann und daß bei eingeschaltetem Hauptschalter die Haupttrennkontakte nicht betätigt werden können. Diese Schutzvorrichtung kann aus wenigen einfachen Teilen bestehen und ist daher mit geringem Aufwand herstellbar. Insbesondere kann die Hauptkontaktwelle eine nur in ihrer in geschlossenen oder geöffneten Zustand der Haupttrennkontaktvorrichtung entsprechenden Stellung einen Eingriff der ersten Riegelstange gestattende Riegelöffnung besitzen. Nach einer abgewandelten Ausführungsform kann die erste Riegelstange eine vor dem bedienungsseitigen Ende der Hauptkontaktwelle verschiebbare Riegelblende mit einer Durchtrittsöffnung für das zur Bedienung der Hauptkontaktwelle vorgesehene Werkzeug besitzen.

Durch die DE 32 43 106 A1 ist eine Verriegelungsvorrichtung für einen Einschub bekanntgeworden, die zwei gegenläufig durch ein Ritzel verschiebbare Zahnstangen als Riegel aufweist. Eine der Zahnstangen besitzt Ausnehmungen, mit denen eine Verriegelungsstange in Abhängigkeit von der Stellung einer Schaltwelle eines Schaltgerätes zusammenwirkt. Demgegenüber verhindert die Einrichtung nach der Erfindung bereits den Versuch, einen Einschub zu entriegeln, solange das Schaltgerät eingeschaltet ist.

Der Schutz gegen eine fehlerhafte Bedienung des Hauptschalters kann noch dadurch verbessert werden, daß in die Schutzvorrichtung auch die Bedingung einbezogen wird, daß sich der Geräteträger im Schrankgerüst in der richtigen Position befindet. Nach einer Weiterbildung der Erfindung kann dies durch folgende Merkmale geschehen:
- mit der Antriebswelle des Hauptschalters ist eine zweite Riegelstange zwangsläufig gekuppelt, die beim Einschalten des Hauptschalters in Richtung des Fachbodens verschiebbar und in eine im Fachboden befindliche Öffnung einführbar ist, wenn der Geräteträger vollständig in das Einschubfach eingeschoben ist,
- die erste Riegelstange ist mit der Antriebswelle des Hauptschalters mittelsbar gekuppelt, und zwar durch einen die zweite Riegelstange spannbaren Federspeicher,
- die erste Riegelstange besitzt ein mit der zweiten Riegelstange zusammenwirkendes Sperrstück, und
- das Sperrstück blockiert die zweite Riegelstange bei außerhalb der Riegelöffnung der Hauptkontaktwelle stehender erster Riegelstange.

Das Sperrstück der ersten Riegelstange kann auf einer Grundplatte des Geräteträgers gleitend geführt sein und kann bei vollständig in das Einschubfach eingeschobenem Geräteträger eine Durchtrittsöffnung einer Bodenplatte des Geräteträgers verdecken, wobei die Durchtrittsöffnung mit der Öffnung im Fachboden fluchtet, wenn der Geräteträger vollständig eingeschoben ist.

Hierdurch wird erreicht, daß die Schutzvorrichtung auch durch erheblichen Kraftaufwand bei einer fehlerhaften Bedienung des Hauptschalters nicht beschädigt werden kann.

Der Raumbedarf einer Anordnung mit einer ersten Riegelstange und einer zweiten Riegelstange einschließlich einer Speicherfeder kann nach einer Ausgestaltung der Erfindung dadurch überraschend gering gehalten werden, daß die Antriebswelle des Hauptschalters und die Hauptkontaktwelle mit einem gegenseitigen Abstand etwa parallel angeordnet sind und daß die erste Riegelstange und die zweite Riegelstange etwa rechtwinklig zueinander verschiebbar geführt sind, wobei der Federspeicher eine Biegefeder mit winkig zueinander stehenden Schenkeln ist, von denen der eine Schenkel mit der ersten Riegelstange direkt verbunden ist, während der andere Schenkel winklig zur Bewegungsrichtung der zweiten Riegelstange angeordnet und durch einen ersten Mitnehmerstift der zweiten Riegelstange beaufschlagbar ist.

Bei der vorstehend erläuterten Anordnung kann die erste Riegelstange durch eine beliebige Rückstellkraft in ihre Ausgangslage zurückbewegt werden, wenn der Hauptschalter ausgeschaltet wird. Es empfiehlt sich jedoch, zur Bereitstellung einer auf die erste Riegelstange wirkenden Rückstellkraft an der zweiten Riegelstange einen zweiten Mitnehmerstift derart anzuordnen, daß der zweite Schenkel der Speicherfeder zwischen dem ersten Mitnehmerstift und dem zweiten Mitnehmerstift hindurchtritt.

Der zweite Mitnehmerstift ist nach einer abgewandelten Ausgestaltung entbehrlich, wenn die erste Riegelstange eine Schrägfläche in solcher Anordnung besitzt, daß die erste Riegelstange durch den ersten Mitnehmerstift der zweiten Riegelstange in die Ruhestellung zurückführbar ist.

Eine zweckmäßig vorgesehene Vorspannung des Federspeichers kann im Ruhezustand der Anordnung dadurch aufgefangen werden, daß die erste Riegelstange einen Ausleger mit einer Anschlagnase für den winklig zur Bewegungsrichtung der zweiten Riegelstange stehenden Schenkel der Biegefeder besitzt.

Für die erwünschte Blockierung der Hauptkontaktwelle bei eingeschaltetem Hauptschalter ist es an sich ausreichend, wenn sich die Riegelöffnung nur über einen Teil des Durchmessers der Hauptkontaktwelle erstreckt. Günstiger ist es jedoch, wenn sich die Riegelöffnung über den ganzen Durchmesser der Hauptkontaktwelle erstreckt und wenn die erste Riegelstange beim Einschalten des Hauptschalters die Riegelöffnung vollständig einnimmt.

Geräteträger der im Zusammenhang mit der Erfindung betrachteten Art können auch Hilfstrennkontakte aufweisen. In diesem Zusammenhang wurde bereits vorgeschlagen, eine Hilfskontaktwelle konzentrisch außenliegend zu der Hauptkontaktwelle anzuordnen. In Weiterbildung der Erfindung kann eine solche Hilfskontaktwelle dadurch in die beschriebene Schutzvorrichtung einbezogen werden, daß die Hilfskontaktwelle mit einer Hilfsriegelöffnung versehen ist und daß bei geöffneter oder geschlossener Haupttrennkontaktvorrichtung die Hauptriegelöffnung mit der Hilfsriegelöffnung fluchtet und von der ersten Riegelstange durchsetzbar ist.

Ferner empfiehlt es sich, die Hauptriegelöffnung und ggfs. die Hilfsriegelöffnung nahe dem bedienungsseitigen und für den Eingriff des Werkzeuges vorgesehenen Endstück der Hauptkontaktwelle und ggfs. der Hilfskontaktwelle anzuordnen. Hierdurch wird verhindert, daß sich das Werkzeug zum Bedienen der Trennkontaktwellen überhaupt einstecken läßt und hierdurch eine fehlerhafte Bedienung unmöglich gemacht wird.

Die Erfindung wird im folgenden anhand der in der Figuren dargestellten Ausführungsbeispiele näher erläutert.

Die Figur 1 zeigt schematisch einen Teil des Schrankgerüstes einer Niederspannungs-Schaltanlage mit einem Geräteträger und einer Trennkontaktvorrichtung.

Die Figur 2 zeigt gesondert und in größerem Maßstab eine Schutzvorrichtung gegen eine Fehlbedienung eines auf dem Geräteträger gemäß Figur 1 befindlichen Hauptschalters bei eingeschaltetem Hauptschalter.

Die Figur 3 zeigt die Vorrichtung gemäß den Figuren 1 und 2 in blockierter Stellung.

Die Figur 4 zeigt eine weitere Ausführungsform einer Vorrichtung gegen Fehlbedienung eines Hauptschalters, wobei zusätzlich die Position des Geräteträgers im Einschubfach berücksichtigt wird.

In der Figur 5 ist die Vorrichtung gemäß der Figur 4 in der Draufsicht gezeigt, und zwar gleichfalls in der ausgeschalteten Stellung.

Die Figur 6 zeigt die Vorrichtung gemäß den Figuren 4 und 5 in der blockierten Stellung.

In der Figur 7 ist die Vorrichtung gemäß den Figuren 4, 5 und 6 bei eingeschaltetem Hauptschalter gezeigt.

Die Figur 8 zeigt eine abgewandelte Ausführungsform einer Vorrichtung ähnlich der Figur 4 bei ausgeschaltetem Hauptschalter.

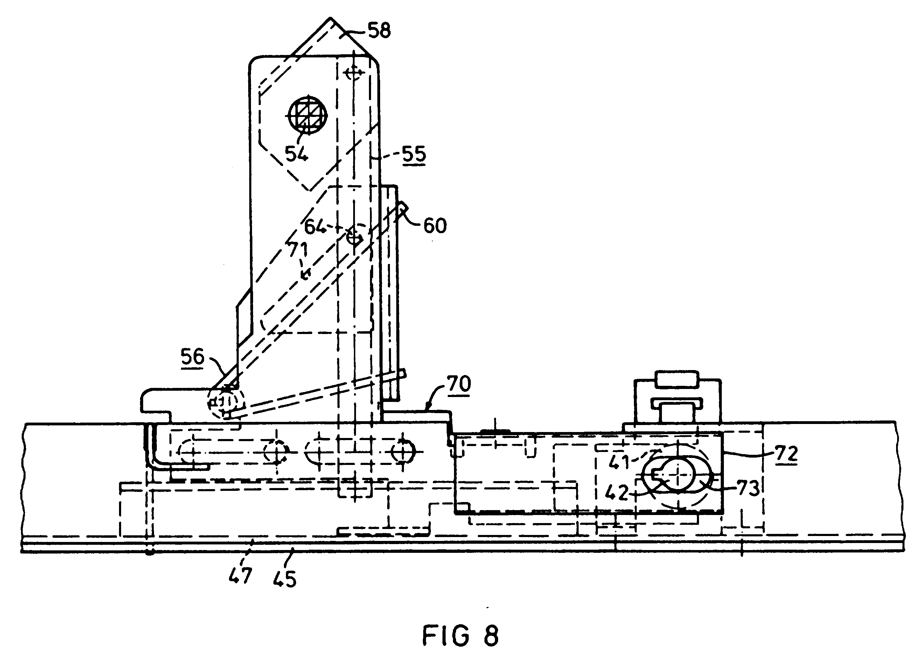

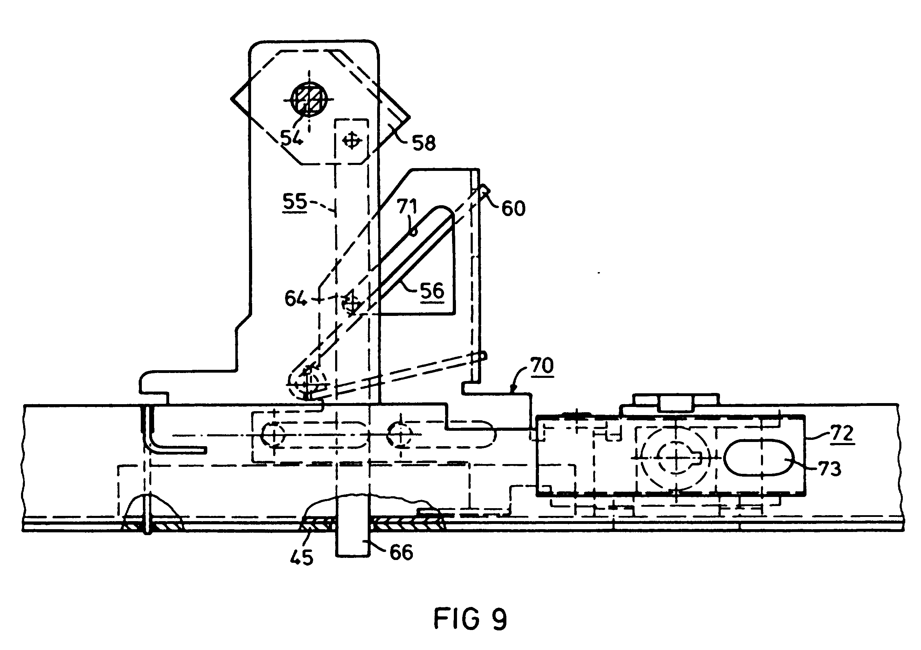

Die Vorrichtung gemäß der Figur 8 bei eingeschaltetem Hauptschalter zeigt die Figur 9.

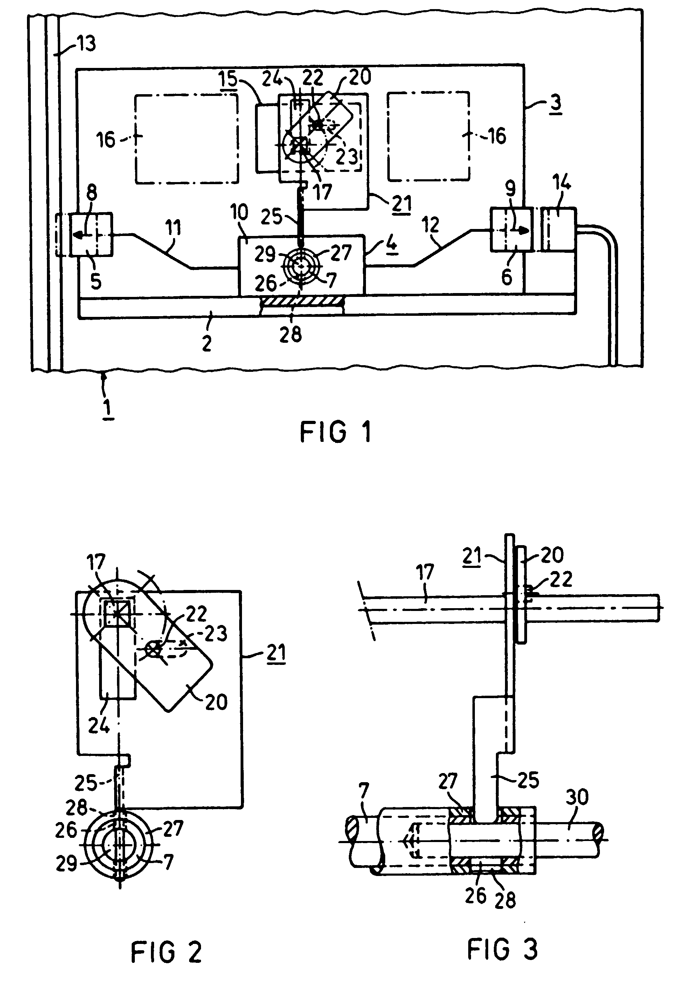

Das in der Figur 1 abgebrochen dargestellte Schrankgerüst 1 einer Niederspannungs-Schaltanlage enthält einen Fachboden 2, auf dem sich ein Geräteträger 3 befindet. Der Geräteträger 3 ist mit einer Antriebsvorrichtung 4 für eine Haupttrennkontaktvorrichtung versehen, die einen bewegbaren Trennkontaktblock 5 für die Einspeisung sowie einen weiteren Trennkontaktblock 6 für einen Abgang zu einem Verbraucher umfaßt. Die Antriebsvorrichtung 4 für die Trennkontaktblöcke 5 und 6 umfaßt eine frontseitig am Geräteträger 3 zugängliche Welle 7 sowie eine Umlenkeinrichtung 10, die dazu dient, eine Drehbewegung der Welle 7 in gegenläufige Schubbewegungen von Schiebern 11 und 12 umzuformen, die mit den Trennkontaktblöcken 5 und 6 verbunden sind. Auf diese Weise sind die in der Figur 1 in der Ausschaltstellung gezeigten Trennkontaktblöcke 5 und 6 in Richtung von Pfeilen 8 und 9 in ihre strichpunktiert gezeigten Einschaltstellungen zu bewegen. Dabei gelangt der Trennkontaktblock 5 in Eingriff mit Feldsammelschienen 13, die in dem Schrankgerüst 1 vertikal links neben dem Fachboden 2 angeordnet sind. Ferner gelangt der Trennkontaktblock 6 mit einem Gegenkontaktblock 14 in Eingriff, der an der rechten Seite des Fachbodens 2 im Schrankgerüst 1 angeordnet ist.

Zu der Geräteausstattung des Geräteträgers 3 gehören ein Hauptschalter 15 und weitere Schaltgeräte, die strichpunktiert bei 16 angedeutet sind. Es kann sich hierbei um Schütze, Stromwandler und Schutzeinrichtungen handeln. Der Hauptschalter 15 besitzt eine Antriebswelle 17, die in bekannter Weise durch einen Drehgriff, einen Knebel oder ähnliche Betätigungsorgane bedienbar ist. Auf der Antriebswelle 17 sitzt ein Hebel 20, mit dem eine erste Riegelstange 21 gelenkig verbunden ist. Hierzu trägt der Hebel 20 einen Gelenkstift 22, der in ein Langloch 23 der ersten Riegelstange 21 eingreift. Mit einem Führungsfenster 24 ist die erste Riegelstange 21 auf der Antriebswelle 17 verschiebbar geführt. Am unteren Ende besitzt die Riegelstange 21 eine Riegelnase 25, die in eine Hauptriegelöffnung 26 der Hauptkontaktwelle 7 einführbar ist, wenn sich die Hauptkontaktwelle in einer ensprechenden Stellung befindet. Konzentrisch außenliegend zu der Hauptkontaktwelle 7 ist eine Hilfskontaktwelle 27 angeordnet, durch die eine Hilfskontaktvorrichtung zu betätigen ist. Entsprechende Teile können ähnlich wie die Antriebsvorrichtung 10 ausgebildet sein. Die Hilfskontaktwelle 27 besitzt eine Hilfsriegelöffnung 28.

In der Figur 2 sind nur die zum Schutz gegen eine Fehlbedienung des Hauptschalters 15 vorgesehenen Teile in größerem Maßstab gezeigt, und zwar in der Einschaltstellung des Hauptschalters 15. In dieser Stellung ist der Hebel 20 gegenüber der Figur 1 um 90° im Uhrzeigersinn gedreht. Die erste Riegelstange 21 ist hierdurch nach unten derart verschoben, daß die Riegelnase 25 vollständig in die Hauptriegelöffnung 26 und die mit dieser korrespondierende Hilfsriegelöffnung 28 eingreift. Die Hauptkontaktwelle 7 und die Hilfskontaktwelle 27 können daher nicht mehr betätigt werden.

Eine weitere Stellung der beschriebenen Vorrichtung zeigt die Figur 3 in einer Seitenansicht teilweise im Schnitt. Diese Figur zeigt den Zustand, daß in die Einstecköffnung 29 der Antriebsvorrichtung 10 ein Steuerschlüssel 30 eingesteckt ist, bei dem es sich um einen nur zur Betätigung der Hilfskontaktwelle 27 dienenden Schlüssel oder um einen zur Betätigung sowohl der Hauptkontaktwelle 7 als auch der Hilfskontaktwelle 27 dienenden Schlüssel handeln kann. Wie die Figur 3 zeigt, kann in diesem Zustand die Antriebswelle 17 des Hauptschalters 15 nur soweit gedreht werden, daß die Riegelnase 25 der ersten Riegelstange 21 auf den Schlüssel 30 trifft. Die Vorrichtung ist damit blockiert, so daß der Hauptschalter 15 (Figur 1) nicht eingeschaltet werden kann.

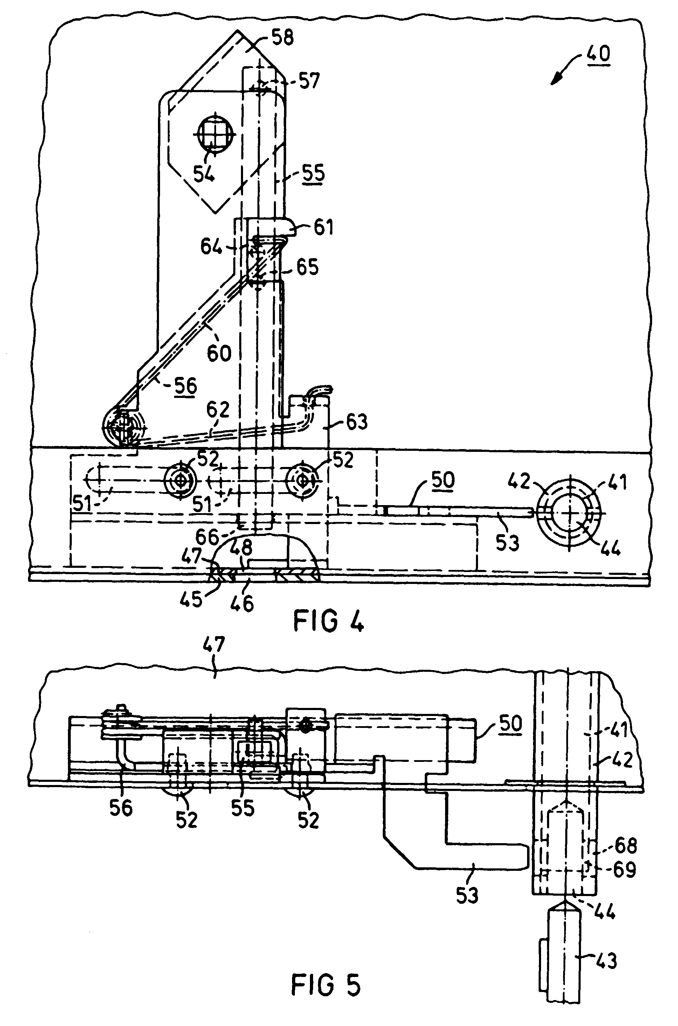

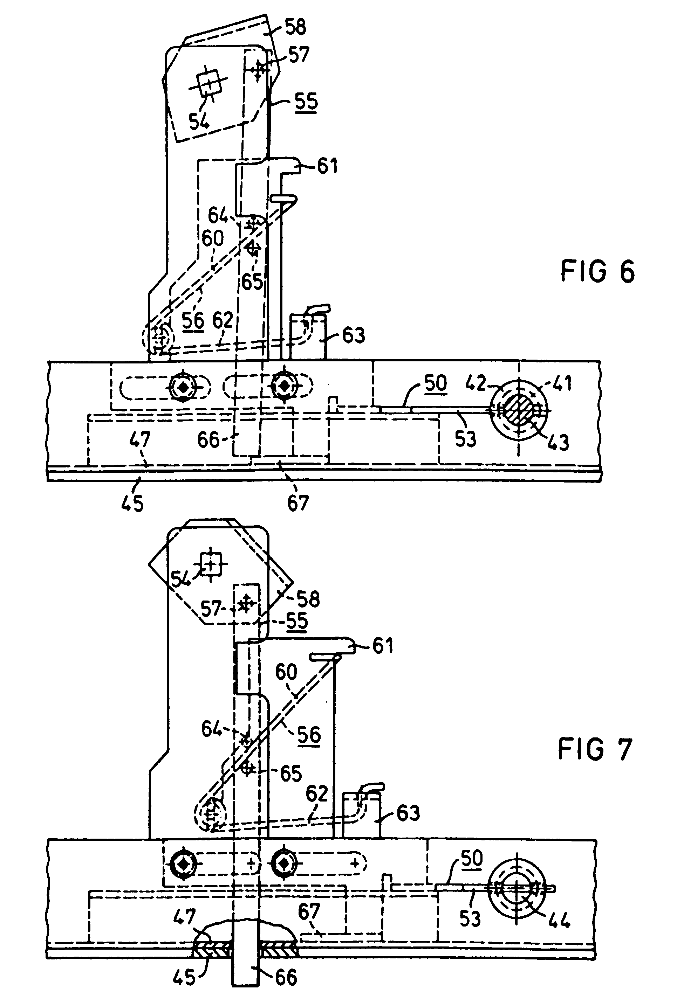

Die anhand der folgenden Figuren 4, 5, 6 und 7 zu beschreibende zweite Ausführungsform der Erfindung dient dazu, die Betätigung eines Hauptschalters nicht nur von der Stellung einer Trennkontaktwelle, sondern auch von der Stellung des Geräteträgers im Einschubfach eines Schrankgerüstes abhängig zu machen. Ähnlich wie in der Figur 1 sind an einem Geräteträger 40 konzentrisch zueinander eine Hauptkontaktwelle 41 und eine Hilfskontaktwelle 42 frontseitig zugänglich angeordnet und durch Einführung eines Steuerschlüssels 43 in eine Einstecköffnung 44 betätigbar. Der Geräteträger 40 ruht auf einem Fachboden 45, der eine Öffnung 46 besitzt. Eine Bodenplatte 47 des Geräteträgers 40 ist mit einer Durchtrittsöffnung 48 versehen, die bei vollständig in das Schrankgerüst eingeschobenem Geräteträger 40 mit der Öffnung 46 des Fachbodens 45 fluchtet. Eine erste Riegelstange 50 ist mittels zweier Langlöcher 51 und diese durchsetzender Führungsbolzen 52 parallel zur Bodenplatte 47 verschiebbar gelagert. Eine Riegelnase 53 der Riegelstange 50 endet in der in den Figuren 4 und 5 gezeigten Ausschaltstellung der Antriebswelle 54 eines nicht gezeigten Hauptschalters mit kurzem Abstand neben der Hilfskontaktwelle 42. Im Unterschied zu dem Ausführungsbeispiel gemäß den Figuren 1 bis 3 wird die erste Riegelstange 50 durch die Antriebswelle 54 nicht direkt, sondern unter Zwischenschaltung einer zweiten Riegelstange 55 und eines Federspeichers 56 betätigt. Die zweite Riegelstange 55 ist mit einem auf der Antriebswelle 54 des nicht gezeigten Hauptschalters verbundenen Hebel 58 durch einen Stift 57 gelenkig verbunden. Die zweite Riegelstange 55 erstreckt sich in Richtung auf die Bodenplatte 47 des Geräteträgers 40, wobei ein unterer Endteil 66 der Durchtrittsöffnung 48 in der Bodenplatte 47 und der hiermit korrespondierenden Öffnung 46 im Fachboden 45 gegenübersteht. Der als Drahtbiegefeder ausgebildete Federspeicher 56 stützt sich mit dem Ende eines winklig zur Längserstreckung der zweiten Riegelstange 55 angeordneten Schenkel 60 an einer Anschlagnase 61 der zweiten Riegelstange 55 ab, während der zweite Schenkel 62 der Federspeicher 56 an einem Fortsatz 63 der ersten Riegelstange 50 eingehängt ist. Ferner weist die zweite Riegelstange 55 einen oberen Mitnehmerstift 64 und einen unteren Mitnehmerstift 65 auf, die so angeordnet sind, daß der Schenkel 60 des Federspeichers 56 zwischen den beiden Mitnehmerstiften 64 und 65 hindurchtreten kann.

In der Figur 6 ist der Zustand gezeigt, daß in die Antriebsvorrichtung der Trennkontaktvorrichtung der Schlüssel 43 eingesteckt ist. Wird nun versucht, den Hauptschalter einzuschalten, so kann die Antriebswelle 54 des Hauptschalters nur bis zu der in der Figur 6 gezeigten Stellung gedreht werden, weil ein Endteil 66 der zweiten Riegelstange 55 auf einem Sperrstück 67 aufsetzt, das an die erste Riegelstange 50 angeformt ist und das auf der Bodenplatte 47 des Geräteträgers 40 gleitend geführt ist. In dieser Stellung ist der obere Schenkel 60 des Federspeichers 56 durch den oberen Mitnehmerstift 64 gespannt und dadurch von der Anschlagnase 61 abgehoben. Aufgrund der winkligen Stellung des Schenkels 60 des Federspeichers 56 wird auf die erste Riegelstange 50 eine in Richtung der Trennkontaktwellen 41 und 42 gerichtete Kraft ausgeübt, der jedoch die erste Riegelstange 50 nicht folgen kann, weil die Riegelnase 53 auf den Schlüssel 43 aufsetzt.

Stehen die Hauptkontaktwelle 41 und die Hilfskontaktwelle 42 in der richtigen Stellung, d. h. mit korrespondierenden und auf die Riegelnase 53 der ersten Riegelstange 50 ausgerichteten Riegelöffnungen 68 und 69 (Figur 5), so kann der Hauptschalter eingeschaltet werden, wie dies die Figur 7 zeigt. In dieser ist die Antriebswelle 54 gegenüber der Figur 4 um 90° gedreht, und die zweite Riegelstange 55 durchsetzt mit ihrem Endteil 66 sowohl die Bodenplatte 47 des Geräteträgers 40 als auch den Fachboden 45. Diese Stellung der zweiten Riegelstange 55 wird dadurch ermöglicht, daß im Laufe der Drehung der Antriebswelle 54 die erste Riegelstange 50 aufgrund des Zusammenwirkens des oberen Mitnehmerstiftes 64 mit dem winklig stehenden Schenkel 60 des Federspeichers 56 nach rechts verschoben und das Sperrstück 67 aus dem Bereich des Endteiles 66 fortbewegt wurde.

Beim Ausschalten des Hauptschalters und einer entsprechenden Drehung der Antriebswelle 54 um 90° entgegen dem Uhrzeigersinn werden die beschriebenen Teile in die Ausgangslage gemäß der Figur 4 dadurch zurückgeführt, daß der untere Minehmerstift 65 wiederum durch Zusammenwirken mit dem winkig stehenden Schenkel 60 des Federspeichers 56 auf die erste Riegelstange 50 eine nach links gerichtete Kraft ausübt.

In dem abgewandelten Ausführungsbeispiel gemäß den Figuren 8 und 9 sind für die mit den Figuren 4, 5, 6 und 7 übereinstimmende Teile die gleichen Bezugszeichen eingesetzt. Verändert ausgebildet ist jedoch eine erste Riegelstange 70, die zur Rückführung in die Ausgangsstellung ( Fig. 8) eine Schrägfläche 71 aufweist. In dem gezeigten Beispiel wird die Schrägfläche 71 durch eine Begrenzungskante einer etwa dreieckförmigen Ausnehmung gebildet. In diese Ausnehmung greift der obere Mitnehmerstift 64 ein, während ein unterer Mitnehmerstift entgegen dem Ausführungsbeispiel gemäß den Figuren 4 bis 7 nicht benötigt wird. Ein weiteres unterschiedliches Merkmal ist eine Riegelblende 72, die mit einer Durchtrittsöffnung 73 für ein Werkzeug (43 in Fig. 5) versehen ist. Die Riegelblende 72 wird direkt vor dem bedienungsseitigen Ende der Hauptkontaktwelle 41 geführt und gewährt daher in der Ausschaltstellung des Hauptschalters gemäß der Figur 8 dem Werkzeug 43 Zugang zu der Hauptriegelöffnung 68.

Beim Einschalten des Hauptschalters (Figur 9) wird die erste Riegelstange 70 mittels der zweiten Riegelstange 55 und des oberen Mitnehmerstiftes derart verschoben, daß die Riegelblende 72 die Hauptriegelöffnung 68 verdeckt. In dieser Sperrstellung ist es daher nicht möglich, das Werkzeug 43 überhaupt in Berührung mit der Hauptkontaktwelle 41 zu bringen. Beim Ausschalten gleitet der obere Mitnehmerstift 64 an der Schrägfläche 71 entlang und schiebt damit die erste Riegelstange 70 in die Stellung gemäß der Figur 8 zurück.

## Patentansprüche

1. Niederspannungs-Schaltanlage mit einem Schrankgerüst (1) und mit einem Geräteträger (3; 40), der mit einer in der Tiefenerstreckung des Schrankgerüstes (1) liegenden Bewegungsrichtung in das Schrankgerüst (1) einsetzbar bzw. entnehmbar ist, mit folgenden Merkmalen:
- wenigstens ein Fachboden (2; 45) als untere Begrenzung eines Einschubfaches,
- eine Haupttrennkontaktvorrichtung, bestehend aus je einem an dem Geräteträger (3) angeordneten bewegbaren Trennkontaktblock (5, 6) für die Einspeisung und für wenigstens einen Abgang zu einem Verbraucher sowie an dem Schrankgerüst (1) ortsfest angebrachten, mit den Trennkontaktblöcken (5, 6) zusammenwirkenden Trennkontaktstücken,
- eine Antriebsvorrichtung (4) zum Schließen und Öffnen der Haupttrennkontaktvorrichtung, wenn sich der Geräteträger (3, 40) in dem zugehörigen Einschubfach befindet,
- wobei die Antriebsvorrichtung (4) eine an dem Geräteträger (3; 40) drehbar gelagerte und zur Betätigung mittels eines Werkzeuges (30, 43) frontseitig am Geräteträger (3; 40) zugängliche Hauptkontaktwelle (7; 41) sowie eine Umlenkeinrichtung (10) zur Umlenkung einer Drehbewegung der Hauptkontaktwelle (7) in eine quer zur Bewegungsrichtung des Geräteträgers (3; 40) verlaufende Schubrichtung der bewegbaren Trennkontaktblöcke (5, 6) besitzt,
**dadurch gekennzeichnet,** daß
- mit der Antriebswelle (17; 54) eines zu der Geräteausstattung des Geräteträgers (3; 40) gehörenden, elektrisch in Reihe mit dem der Einspeisung zugeordneten Trennkontaktblock (5) liegenden Hauptschalters (15) eine erste Riegelstange (21; 50) gekuppelt und beim Einschalten des Hauptschalters (15) in Richtung auf die Hauptkontaktwelle (7; 41) verschiebbar ist, und
- der Zugang des Werkzeuges (30, 43) zur Hauptkontaktwelle (7; 41) durch die erste Riegelstange versperrbar ist.

2. Niederspannungs-Schaltanlage nach Anspruch 1,
**dadurch gekennzeichnet,** daß
- die Hauptkontaktwelle (7; 41) eine nur in ihrer dem geschlossenen oder geöffneten Zustand der Haupttrennkontaktvorrichtung entsprechenden Stellung einen Eingriff der ersten Riegelstange (21; 50) gestattende Hauptriegelöffnung (26; 68 ) besitzt.

3. Niederspannungs-Schaltanlage nach Anspruch 1,
**dadurch gekennzeichnet,** daß die erste Riegelstange (70) eine vor dem bedienungsseitigen Ende der Hauptkontaktwelle (41) verschiebbare Riegelblende (72) mit einer Durchtrittsöffnung (73) für das zur Bedienung der Hauptkontaktwelle (41) vorgesehene Werkzeug (43) besitzt.

4. Niederspannungs-Schaltanlage nach einem der vorangehenden Ansprüche,
**gekennzeichnet durch** folgende Merkmale:
- mit der Antriebswelle (54) des Hauptschalters ist eine zweite Riegelstange (55) zwangsläufig gekuppelt, die beim Einschalten des Hauptschalters in Richtung des Fachbodens (45) verschiebbar und in eine im Fachboden (45) befindliche Öffnung (46) einführbar ist, wenn der Geräteträger (40) vollständig in das Einschubfach eingeschoben ist,
- die erste Riegelstange (50) ist mit der Antriebswelle (54) des Hauptschalters mittelbar gekuppelt, und zwar durch einen durch die zweite Riegelstange (55) spannbaren Federspeicher (56),
- die erste Riegelstange (50) besitzt ein mit der zweiten Riegelstange (55) zusammenwirkendes Sperrstück (67), und
- das Sperrstück (67) blockiert die zweite Riegelstange (55) bei außerhalb der Riegelöffnung (68) der Hauptkontaktwelle (41) stehender erster Riegelstange (50).

5. Niederspannungs-Schaltanlage nach Anspruch 4,
**dadurch gekennzeichnet,** daß das Sperrstück (67) der ersten Riegelstange (50) auf einer Bodenplatte (47) des Geräteträgers (40) gleitend geführt ist und eine Durchtrittsöffnung (48) in der Bodenplatte (47) des Geräteträgers (40) verdeckt, wobei die Durchtrittsöffnung (48) mit der Öffnung (46) im Fachboden (45) fluchtet, wenn der Geräteträger (40) vollständig eingeschoben ist.

6. Niederspannungs-Schaltanlage nach einem der vorangehenden Ansprüche,
**dadurch gekennzeichnet,** daß die Antriebswelle (54) des Hauptschalters und die Hauptkontaktwelle (41) mit einem gegenseitigen Abstand etwa parallel angeordnet sind und daß die erste Riegelstange (50) und die zweite Riegelstange (55) etwa rechtwinklig zueinander verschiebbar geführt sind, wobei der Federspeicher (56) eine Biegefeder mit winklig zueinander stehenden Schenkeln (60, 62) ist, von denen der eine Schenkel (62) mit der ersten Riegelstange (50) direkt verbunden ist, während der andere Schenkel (60) winklig zur Bewegungsrichtung der zweiten Riegelstange (55) angeordnet und durch einen ersten Mitnehmerstift (64) der zweiten Riegelstange (55) beaufschlagbar ist.

7. Niederspannungs-Schaltanlage nach Anspruch 4,
**dadurch gekennzeichnet,** daß zur Bereitstellung einer auf die erste Riegelstange (50) wirkenden Rückstellkraft an der zweiten Riegelstange (55) ein zweiter Mitnehmerstift (65) angeordnet ist, derart, daß der zweite Schenkel (60) des Federspeichers (56) zwischen dem ersten Mitnehmerstift (64) und dem zweiten Mitnehmerstift (65) hindurchtritt.

8. Niederspannungs-Schaltanlage nach Anspruch 6,
**dadurch gekennzeichnet,** daß die erste Riegelstange (70) eine Schrägfläche (71) in solcher Anordnung besitzt, daß die erste Riegelstange (70) durch den ersten Mitnehmerstift (64) der zweiten Riegelstange (55) in die Ruhestellung zurückführbar ist.

9. Niederspannungs-Schaltanlage nach Anspruch 6,
**dadurch gekennzeichnet,** daß die zweite Riegelstange (55) einen Ausleger mit einer Anschlagnase (61) für den winklig zur Bewegungsrichtung der zweiten Riegelstange (55) stehenden Schenkel (60) des Federspeichers (56) besitzt.

10. Niederspannungs-Schaltanlage nach einem der vorangehenden Ansprüche,
**dadurch gekennzeichnet,** daß sich die Hauptriegelöffnung (26; 68) über den ganzen Durchmesser der Hauptkontaktwelle (7; 41) erstreckt und die erste Riegelstange (21; 50) beim Einschalten des Hauptschalters (15) die Hauptriegelöffnung (26; 68) vollständig einnimmt.

11. Niederspannungs-Schaltanlage nach einem der vorangehenden Ansprüche,
**dadurch gekennzeichnet,** daß bei einem auch mit einer Hilfstrennkontaktvorrichtung ausgerüsteten Geräteträger (3; 40) dessen Hilfskontaktwelle (27; 42) wenigstens bedienungsseitig außenliegend konzentrisch zu der Hauptkontaktwelle (7; 41) angeordnet und mit einer Hilfsriegelöffnung (28; 69) versehen ist und daß bei geöffneter oder geschlossener Haupttrennkontaktvorrichtung die Hauptriegelöffnung (26; 68) mit der Hilfsriegelöffnung (28; 69) fluchtet und von der ersten Riegelstange (21; 50) durchsetzbar ist.

12. Niederspannungs-Schaltanlage nach einem der vorangehenden Ansprüche,
**dadurch gekennzeichnet,** daß die Hauptriegelöffnung (26; 41) und ggfs. die Hilfsriegelöffnung (28; 42) nahe der bedienungsseitigen und für den Eingriff des Werkzeuges (30; 43) vorgesehenen Einstecköffnung (29; 44) der Hauptkontaktwelle (7; 41) und ggfs. der Hilfstrennkontaktwelle (27; 42) angeordnet ist.

## Claims

1. L.V. switching installation having a cubicle framework (1) and having an apparatus rack (3; 40) which can be inserted into or withdrawn from the cubicle framework (1) in a direction of movement along the depth of the cubicle framework (1), having the following features:
- at least one compartment floor (2; 45) as the lower boundary of a push-in compartment,
- a main isolating contact device respectively comprising a movable isolating contact block (5, 6), arranged on the apparatus rack (3), for the feeding and for at least one outlet to a load, as well as isolating contact pieces fitted in a stationary fashion on the cubicle framework (1) and interacting with the isolating contact blocks (5, 6),
- a drive device (4) for closing and opening the main isolating contact device when the apparatus rack (3, 40) is located in the associated push-in compartment,
- it being the case that the drive device (4) has a main contact shaft (7; 41), which is rotatably mounted on the apparatus rack (3; 40) and accessible at the front on the apparatus rack (3; 40) for the purpose of actuation by means of a tool (30; 43), as well as a deflecting device (10) for deflecting a rotary motion of the main contact shaft (7) into a direction of push, extending transversely to the direction of movement of the apparatus rack (3; 40), of the movable isolating contact blocks (5, 6), characterized in that
- a first locking bar (21; 50) is coupled to the drive shaft (17; 54) of a master switch (15), which belongs to the equipment of the apparatus rack (3; 40) and is connected electrically in series with the isolating contact block (5) assigned for feeding, and which locking bar can be displaced upon closure of the master switch (15) in the direction of the main contact shaft (7; 41), and
- access of the tool (30, 43) to the main contact shaft (7; 41) can be blocked by the first locking bar.

2. L.V. switching installation according to Claim 1, characterized in that
- the main contact shaft (7; 41) has a main locking opening (26; 68) which permits engagement of the first locking bar (21; 50) only in its position corresponding to the closed or open state of the main isolating contact device.

3. L.V. switching installation according to Claim 1, characterized in that the first locking bar (70) has a locking cover (72) which can be displaced in front of the operating-side end of the main contact shaft (41) and which has a passage opening (73) for the tool (43) provided for operating the main contact shaft (41).

4. L.V. switching installation according to one of the preceding claims, characterized by the following features:
- positively coupled to the drive shaft (54) of the master switch is a second locking bar (55) which can be displaced in the direction of the compartment floor (45) upon closure of the master switch and can be inserted into an opening (46) located in the compartment floor (45) when the apparatus rack (40) is completely inserted into the push-in compartment,
- the first locking bar (50) is indirectly coupled to the drive shaft (54) of the master switch, specifically by means of a spring energy store (56) which can be tensioned by the second locking bar (55),
- the first locking bar (50) has a blocking piece (67) interacting with the second locking bar (55), and
- the blocking piece (67) blocks the second locking bar (55) when the first locking bar (50) is outside the locking opening (68) of the main contact shaft (41).

5. L.V. switching installation according to Claim 4, characterized in that the blocking piece (67) of the first locking bar (50) is guided in a sliding fashion on a baseplate (47) of the apparatus rack (40) and covers a passage opening (48) in the baseplate (47) of the apparatus rack (40), the passage opening (48) being aligned with the opening (46) in the compartment floor (45) when the apparatus rack (40) is completely inserted.

6. L.V. switching installation according to one of the preceding claims, characterized in that the drive shaft (54) of the master switch and the main contact shaft (41) are arranged approximately parallel at a mutual spacing, and in that the first locking bar (50) and the second locking bar (55) are guided such that they can be displaced relative to one another approximately at right angles, the spring energy store (56) being a coiled torsion spring having limbs (60, 62) at an angle to one another, of which one limb (62) is directly connected to the first locking bar (50), while the other limb (60) is arranged at an angle to the direction of movement of the second locking bar (55) and can be acted upon by a first driver pin (64) of the second locking bar (55).

7. L.V. switching installation according to Claim 4, characterized in that for the purpose of providing a restoring force which acts on the first locking bar (50) a second driver pin (65) is arranged on the second locking bar (55) in such a way that the second limb (60) of the spring energy store (56) passes through between the first driver pin (64) and the second driver pin (65).

8. L.V. switching installation according to Claim 6, characterized in that the first locking bar (70) has an inclined surface (71) in an arrangement such that the first locking bar (70) can be returned to the rest position by means of the first driver pin (64) of the second locking bar (55).

9. L.V. switching installation according to Claim 6, characterized in that the second locking bar (55) has a side arm with a stop tab (61) for the limb (60), of the spring energy store (56), at an angle to the direction of movement of the second locking bar (55).

10. L.V. switching installation according to one of the preceding claims, characterized in that the main locking opening (26; 68) extends over the entire diameter of the main contact shaft (7; 41) and the first locking bar (21; 50) completely occupies the main locking opening (26; 68) upon closure of the master switch (15).

11. L.V. switching installation according to one of the preceding claims, characterized in that in the case of an apparatus rack (3; 40) which is also fitted with an auxiliary isolating contact device, the auxiliary contact shaft (27; 42) of said apparatus rack is arranged at least on the operating side in a fashion externally concentric with the main contact shaft (7; 41) and is provided with an auxiliary locking opening (28; 69), and in that when the main isolating contact device is open or closed the main locking opening (26; 68) is aligned with the auxiliary locking opening (28; 69) and can be penetrated by the first locking bar (21; 50).

12. L.V. switching installation according to one of the preceding claims, characterized in that the main locking opening (26; 41) and, if necessary, the auxiliary locking opening (28; 42) is arranged near the insertion opening (29; 44), which is on the operating side and provided for the engagement of the tool (30; 43), of the main contact shaft (7; 41) and, if necessary, near the auxiliary isolating contact shaft (27; 42).

## Revendications

1. Installation de distribution électrique basse tension, comportant un bâti d'armoire (1) et un support d'appareils (3 ; 40), qui peut être introduit dans le bâti d'armoire (1), par un mouvement dans le sens de la profondeur du bâti d'armoire (1), ou bien en être retiré, et présentant les particularités suivantes :
- au moins un fond de casier (2 ; 45) en tant que limite inférieure d'un casier de tiroir,
- un dispositif de sectionnement principal, consistant en un bloc de contacts de coupure (5, 6), disposé mobile disposé sur le support d'appareils (3), pour l'alimentation et pour au moins un branchement vers un appareil utilisateur, ainsi qu'en des plots de contact de coupure, coopérant avec les blocs de contact de coupure (5, 6) et montés fixes sur le bâti d'armoire (1),
- un dispositif d'entraînement (4) pour la fermeture et pour l'ouverture du dispositif de sectionnement principal, lorsque le support d'appareils (3, 40) se trouve dans le casier de tiroir correspondant,
- le dispositif d'entraînement (4) comportant un arbre de contact principal (7 ; 41), monté tournant sur le support d'appareils (3 ; 40) et accessible sur l'avant du support d'appareils (3 ; 40), pour l'actionnement à l'aide d'un outil (30, 43), ainsi qu'un dispositif convertisseur de mouvement (10), pour transformer un mouvement de rotation de l'arbre de contact principal (7) en un mouvement de translation des blocs de contact de coupure (5,6) mobiles, transversalement au sens de déplacement du support d'appareils (3 ; 40),
caractérisée par le fait que
- une première tige de verrouillage (21 ; 50) est reliée à l'arbre de commande (17 ; 54) d'un interrupteur principal (15), appartenant à l'équipement du support d'appareils (3 ; 40) et monté électriquement en série avec le bloc de contacts de coupure (5) associé à l'alimentation, cette tige pouvant être déplacée en direction de l'arbre de contact principal (7 ; 41), lors de la fermeture de l'interrupteur principal (15), et
- que l'accès de l'outil (30, 43) à l'arbre de contact principal (7 ; 41) peut être interdit par la première tige de verrouillage.

2. Installation de distribution électrique basse tension selon la revendication 1,
caractérisée par le fait que
- l'arbre de contact principal (7 ; 41) comporte une ouverture de retenue principale (26 ; 68) permettant un engagement de la première tige de verrouillage (21 ; 50), uniquement dans sa position correspondant à l'état fermé ou ouvert du dispositif de sectionnement principal.

3. Installation de distribution électrique basse tension selon la revendication 1,
caractérisée par le fait que
la première tige de verrouillage (70) présente une plaque d'obturation de verrou (72), déplaçable devant l'extrémité de l'arbre de contact principal (41), du côté commande, avec une ouverture de passage (73) pour l'outil (43) prévu pour la manoeuvre de l'arbre de contact principal (41).

4. Installation de distribution électrique basse tension selon l'une des revendications précédentes,
caractérisée par les particularités suivantes :
- une seconde tige de verrouillage (55) est reliée, à accouplement rigide, à l'arbre d'entraînement (54) de l'interrupteur principal et, lors de la fermeture de l'interrupteur principal, elle peut être déplacée en direction du fond de casier (45) et être introduite dans une ouverture (46) située dans le fond de casier (45), lorsque le support d'appareils (40) est entièrement rentré dans le casier de tiroir,
- la première tige de verrouillage (50) est indirectement reliée à l'arbre d'entraînement (54) de l'interrupteur principal et ce, par un ressort accumulateur (56) propre à être tendu par la seconde tige de verrouillage (55),
- la première tige de verrouillage (50) comporte une pièce de blocage (67), qui coopère avec la seconde tige de verrouillage (55), et
- la pièce de blocage (67) arrête la seconde tige de verrouillage (55), lorsque la première tige de verrouillage (50) se trouve au-dehors de l'ouverture de retenue (68) de l'arbre de contact principal (41).

5. Installation de distribution électrique basse tension selon la revendication 4,
caractérisée par le fait que
la pièce de blocage (67) de la première tige de verrouillage (50) peut être guidée par glissement sur une plaque de base (47) du support d'appareils (40) et recouvre une ouverture de passage (48) dans la plaque de base (47) du support d'appareils (40), l'ouverture de passage (48) étant en alignement avec l'ouverture (46) présente dans le fond de casier (45), lorsque le support d'appareils (40) est complètement rentré.

6. Installation de distribution électrique basse tension selon l'une des revendications précédentes,
caractérisée par le fait que
l'arbre d'entraînement (54) de l'interrupteur principal et l'arbre de contact principal (41) sont disposés à peu près parallèlement l'un à l'autre, avec un écartement mutuel, et que la première tige de verrouillage (50) et la seconde tige de verrouillage (55) peuvent être déplacées à peu près à angle droit l'une par rapport à l'autre, tandis que le ressort accumulateur (56) faisant est un ressort de flexion avec des branches (60, 62) un angle entre elles, l'une (62) des branches étant directement reliée à la première tige de verrouillage (50) tandis que l'autre branche (60) est disposée en faisant un angle avec la direction de déplacement de la seconde tige de verrouillage (55) et peut être sollicitée par une première broche d'entraînement (64) de la seconde tige de verrouillage (55).

7. Installation de distribution électrique basse tension selon la revendication 4,
caractérisée par le fait que
pour pouvoir disposer d'une force de rappel agissant sur la première tige de verrouillage (50), une seconde broche d'entraînement (65) est placée sur la seconde tige de verrouillage (55), de telle manière que la seconde branche (60) du ressort accumulateur (56) passe entre la première broche d'entraînement (64) et la seconde broche d'entraînement(65).

8. Installation de distribution électrique basse tension selon la revendication 6,
caractérisée par le fait que
la première tige de verrouillage (70) présente une surface oblique (71) disposée de telle manière que la première tige de verrouillage (70) puisse être ramenée dans la position de repos par la première broche d'entraînement (64) de la seconde tige de verrouillage (55).

9. Installation de distribution électrique basse tension selon la revendication 6,
caractérisée par le fait que
la seconde tige de verrouillage (55) comporte un bras en porte à faux avec un taquet de butée (61), pour la branche (60) du ressort accumulateur (56), faisant un angle avec la direction du déplacement de la seconde tige de verrouillage (55).

10. Installation de distribution électrique basse tension selon l'une des revendications précédentes,
caractérisée par le fait que
l'ouverture de retenue principale (26 ; 68) s'étend sur la totalité du diamètre de l'arbre de contact principal (7 ; 41) et que la première tige de verrouillage (21 ; 50) est entièrement reçue par l'ouverture de retenue principale (26 ; 68) lors de la fermeture de l'interrupteur principal (15).

11. Installation de distribution électrique basse tension selon l'une des revendications précédentes,
caractérisée par le fait que
dans le cas d'un support d'appareils (3 ; 40) également équipé d'un dispositif de sectionnement auxiliaire, l'arbre de contact auxiliaire (27 ; 42) de celui-ci est situé, au moins du côté manoeuvre, de façon concentrique extérieurement par rapport à l'arbre de contact principal (7 ; 41) et est muni d'une ouverture de retenue auxiliaire (28 ; 69) et que, lorsque le dispositif de sectionnement principal est ouvert ou fermé, l'ouverture de retenue principale (26 ; 68) est en alignement avec l'ouverture de retenue auxiliaire (28 ; 69) et peut être traversée par la première tige de verrouillage (21 ; 50)

12. Installation de distribution électrique basse tension selon l'une des revendications précédentes,
caractérisée par le fait que
l'ouverture de retenue principale (26 ; 41) et, le cas échéant, l'ouverture de retenue auxiliaire (28 ; 42), sont disposées à proximité de l'ouverture d'introduction (29 ; 44) présente dans l'arbre de contact principal (7 ; 41) et, le cas échéant, dans l'arbre de contact auxiliaire (27 ; 42), et prévue du côté manoeuvre et servant à l'engagement de l'outil (30 ; 43).
